# EUROPEAN PATENT SPECIFICATION

(11) **EP 2 288 070 B1**
(45) Date of publication and mention of the grant of the patent: **29.05.2019**
(21) Application number: 09817261.2
(22) Date of filing: 25.09.2009
(51) Int. Cl.: G04G 5/00, G04G 7/00, H04J 3/06

(54) **TIME SYNCHRONIZING METHOD, DEVICE AND SYSTEM OF MASTER CLOCK SIDE AND SLAVE CLOCK SIDE IN SYNCHRONOUS NETWORK**
VERFAHREN, VORRICHTUNG UND SYSTEM ZUR ZEITSYNCHRONISIERUNG DER MASTERTAKSEITE UND DER STRUKTURSEITE IN EINEM SYCHRONEN NETZWERK
PROCÉDÉ, DISPOSITIF ET SYSTÈME DE SYNCHRONISATION TEMPORELLE DE CÔTÉ HORLOGE MAÎTRE ET DE CÔTÉ HORLOGE ESCLAVE DANS UN RÉSEAU SYNCHRONE

(30) Priority: 27.09.2008 CN 200810166875
(43) Date of publication of application: 23.02.2011
(73) Proprietor: Huawei Technologies Co., Ltd., Longgang District Shenzhen, Guangdong 518129 (CN)
(72) Inventor: LI, Yanxin c/o Huawei Technologies Co. Ltd., Int. Prop. Dept., Shenzhen (CN); LI, Jun c/o Huawei Technologies Co. Ltd., Int. Prop. Dept., Shenzhen (CN); CHENG, Gongbao c/o Huawei Technologies Co. Ltd., Int. Prop. Dept., Shenzhen (CN); WANG, Wancai c/o Huawei Technologies Co. Ltd., Int. Prop. Dept., Shenzhen (CN); ZHUO, Xingwang c/o Huawei Technologies Co. Ltd., Int. Prop. Dept., Shenzhen (CN); WU, Bo c/o Huawei Technologies Co. Ltd., Int. Prop. Dept., Shenzhen (CN); ZHOU, Guixin c/o Huawei Technologies Co. Ltd., Int. Prop. Dept., Shenzhen (CN); CHEN, Shilong c/o Huawei Technologies Co. Ltd., Int. Prop. Dept., Shenzhen (CN); LI, Chun c/o Huawei Technologies Co. Ltd., Int. Prop. Dept., Shenzhen (CN); HUA, Tao c/o Huawei Technologies Co. Ltd., Int. Prop. Dept., Shenzhen (CN)
(74) Representative: Isarpatent
(86) International application number: PCT/CN2009/074229
(87) International publication number: WO 2010/037347

(56) References cited:
- EP-A1- 1 914 914
- WO-A1-2007/040222
- CN-A- 1 335 000
- CN-A- 101 232 457
- CN-A- 101 364 863
- US-A1- 2007 260 906
- KANNISTO J ET AL: "Software and Hardware Prototypes of the IEEE 1588 Precision Time Protocol on Wireless LAN", LOCAL AND METROPOLITAN AREA NETWORKS, 2005. LANMAN 2005. THE 14TH IEEE WORKSHOP ON CHANIA, CRETE, GREECE 18-21 SEPT. 2005, PISCATAWAY, NJ, USA,IEEE, 18 September 2005 (2005-09-18), pages 1-6, XP010854276, DOI: DOI:10.1109/LANMAN.2005.1541513 ISBN: 978-0-7803-9565-7
- ANONYMOUS ED - ANONYMOUS: "IEEE Standard for a Precision Clock Synchronization Protocol for Networked Measurement and Control Systems; IEEE Std 1588-2008 (Revision of IEEE Std 1588-2002)", 24 July 2008 (2008-07-24), IEEE STANDARD; [IEEE STANDARD], IEEE, PISCATAWAY, NJ, USA, PAGE(S) C1 - 269, XP017601899, ISBN: 978-0-7381-5400-8 * subsection 6.6. Synchronization overview *
- ANONYMOUS: "IEEE Standard for a Precision Clock Synchronization Protocol for Networked Measurement and Control Systems; IEEE Std 1588-2008 (Revision of IEEE Std 1588-2002)", , 24 July 2008 (2008-07-24), pages 108-123, XP055082867, Retrieved from the Internet: URL:http://ieeexplore.ieee.org/stamp/stamp .jsp?arnumber=4579760 [retrieved on 2008-07-24]

## Description

### FIELD OF THE TECHNOLOGY

The present invention relates to a communication system, and more particularly to a method, device, and system for synchronizing clock in a synchronous network.

### BACKGROUND OF THE INVENTION

In an existing synchronous network, by taking that of China as an example, transit exchange network of each provincial has one clock reference LPR, and the clock is basically synchronized by a Global Positioning System (GPS), so that equipments among transit exchanges can complete synchronization through the GPS. However, with the development of technologies, although the GPS technologies become increasingly mature, no significant progress has been made to improve the operating efficiency, and the high cost resulting from using the GPS technologies begins to constrain the development of the industry. Hence, it is necessary to provide an innovative technology for clock synchronization in a synchronous network.

KANNISTO J ET AL: "Software and Hardware Prototypes of the IEEE 1588 Precision Time Protocol on Wireless LAN", LOCAL AND METROPOLITAN AREA NETWORKS, 2005. LANMAN 2005. THE 14TH IEEE WORKSHOP ON CHANIA, CRETE, GREECE 18-21 SEPT. 2005, PISCATAWAY, NJ, USA,IEEE, 18 September 2005 (2005-09-18), pages 1-6, XP010854276, DOI: DOI:10.1109/LANMAN.2005.1541513 ISBN: 978-0-7803-9565-7 discloses a method for achieving clock synchronization between a master clock device and a slave clock device in a network. In detail, the master clock device sends a synchronization message to the slave clock device and also the sending time tm1 of the synchronization message to the slave clock device. After receiving the synchronization message and the sending time tm1 of the synchronization message, the slave clock device records the receiving time ts1 of the synchronization message, sends a delay request back to the master clock device, and also obtains the sending time ts2 and the receiving time tm2 of the delay request. And then, path delay dw between the master clock device and slave clock device is calculated in a formula of dw =((ts1-tm1)+(ts1- tml))/2, and further the clock offset Ojm of the slave clock device, which is used for adjusting clock time of the slave clock device, is calculated in a formula of Ojm = (ts1- tm1)- dw.

"IEEE Standard for a Precision Clock Synchronization Protocol for Networked Measurement and Control Systems; IEEE Std 1588-2008 (Revision of IEEE Std 1588-2002)", 24 July 2008 (2008-07-24), IEEE STANDARD; [IEEE STANDARD], IEEE, PISCATAWAY, NJ, USA, PAGE(S) C1 - 269, XP017601899, ISBN: 978-0-7381-5400-8; subsection 6.6. "Synchronization overview" discloses a communication standard for clock synchronization, which relates to aspects of clock synchronization, such as master device definition, kinds of algorithm and so on.

EP 1914914A1 also provides a clock synchronization, in which an offset between the master and slave clock device is calculated according to a formula of (T2-T1+T3-T4)/2, wherein the T1, T2, T3 and T4 are respectively sending and receiving time of two synchronization messages. And the adjusted time (time1_updated) could be calculated according to a formula of time1_updated = time1_old + (T2 - T1 + T3 - T4) / 2.

### SUMMARY OF THE INVENTION

Accordingly, the present invention is directed to a method, device, and system for synchronizing clock of a master clock side and a slave clock side in a synchronous network, which can achieve time synchronization in the synchronous network.

In order to achieve the above objectives, the present invention provides a method for synchronizing clock in a synchronous network, the method comprises:
receiving, by a slave clock side equipment, a synchronization message sent from a master clock side equipment;
recording, by the slave clock side equipment, sending time of the synchronization message as first time t1, and receiving time of the synchronization message as second time t2;
performing time adjustment on the slave clock side equipment to obtain a adjusted clock time t, wherein t = to - (t2 - t1), wherein to is original clock time of the slave clock side equipment;
sending, by the slave clock side equipment, a delay request message to the master clock side equipment, and recording sending time of the delay request message as third time t3;
receiving, by the slave clock side equipment, a delay response information from the master clock side equipment, wherein the delay response information comprise the receiving time of the delay request message as a fourth time t4;
calculating, by the slave clock side equipment, a path delay time td between the master clock side equipment and the slave click side equipment, wherein td = (t4 - t3)/2;
re-adjusting the adjusted clock time of the slave clock side equipment according to the path delay time td, wherein the clock time of the slave clock side equipment is re-adjusted by adding one td on the basis of current clock time of the slave clock side equipment;
detecting, by the slave clock side equipment, a running state of a local network element; and notifying, by the slave clock side equipment, a slave clock side processing unit of the slave clock side equipment to stop performing a clock synchronization related operation, when detecting that the local network element is abnormal.

The present invention also provides a computer-readable medium having computer executable instructions for causing a computer to perform the above-outlined method.

In the method for synchronizing clock of a master clock side and a slave clock side in a synchronous network of the present invention, the master clock service unit generates an exit indicating pulse according to a first downlink frame, in which a time delay between the exit indicating pulse and a framing byte in the first downlink frame is fixed. The master clock synchronizing unit sends a synchronization message borne in the first downlink frame; collects first time of a master clock side according to the exit indicating pulse; and sends a follow-up message borne in a second downlink frame, in which the follow-up message carries the first time of the master clock side. The slave clock service unit generates an entry indicating pulse according to the received first downlink frame, in which a time delay between the entry indicating pulse and the framing byte in the first downlink frame is fixed. The slave clock synchronizing unit receives the synchronization message borne in the first downlink frame; collects first time of a slave clock side according to the entry indicating pulse; receives the follow-up message borne in the second downlink frame, in which the follow-up message carries the first time when the slave clock side sends the synchronization message; and adjusts local clock according to a difference between the first time of the master clock side and the first time of the slave clock side. Hence, time synchronization can be achieved in the synchronous network.

### BRIEF DESCRIPTION OF THE DRAWINGS

To make the technical solution under the present invention clearer, the accompanying drawings for illustrating the embodiments of the present invention or the prior art are outlined below.
FIG. 1 is a flow chart of a method for synchronizing clock of a slave clock side in a synchronous network according to an embodiment of the present invention;
FIG. 2 is a flow chart of a method for synchronizing clock of a master clock side in a synchronous network according to an embodiment of the present invention;
FIG. 3 is a flow chart of a method for synchronizing clock in a synchronous network according to a first embodiment of the present invention;
FIGS. 4A and 4B are a flow chart of a method for synchronizing clock in a synchronous network according to a second embodiment of the present invention;
FIG. 5 shows a message format of a clock message transmitted between a synchronizing unit and a service unit according to an embodiment of the present invention;
FIG. 6 is a structural view of a system for synchronizing clock in a synchronous network according to an embodiment of the present invention;
FIG. 7 is a schematic view of a sending circuit of a service frame in a synchronous network according to an embodiment of the present invention;
FIG. 8 is a schematic view of a sending circuit of a service frame in a synchronous network according to an embodiment of the present invention;
FIG. 9 is a timing diagram of an exit indicating pulse TXFP in a sending circuit of a service frame in a synchronous network according to an embodiment of the present invention; and
FIG. 10 is a schematic view of a receiving circuit of a service frame in a synchronous network according to an embodiment of the present invention.

### DETAILED DESCRIPTION OF THE EMBODIMENTS

The following detailed description is directed to the technical solution of the present invention with reference to the accompanying drawings. However, the embodiments to be described are only part of the embodiments of the present invention.

A method, circuit, and system for synchronizing clock of a master clock side and a slave clock side in a synchronous network according to the embodiments of the present invention are hereinafter described in detail with reference to the accompanying drawings.

The present invention is hereinafter introduced in detail with reference to a method for synchronizing clock in a synchronous network according to an embodiment of the present invention.

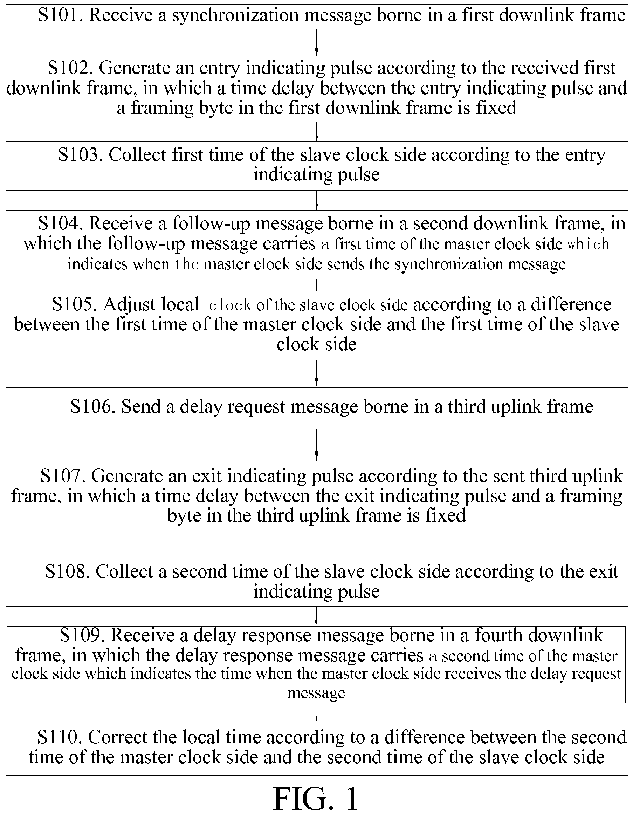

FIG. 1 is a flow chart of a method for synchronizing clock of a slave clock side in a synchronous network according to an embodiment of the present invention. As shown in FIG. 1, the method includes the following steps.

In Step S101, a synchronization message borne in a first downlink frame is received.

In Step S102, an entry indicating pulse is generated according to the received first downlink frame, in which a time delay between the entry indicating pulse and a framing byte in the first downlink frame is fixed.

In Step S103, a first time of the slave clock side is collected according to the entry indicating pulse.

In Step S104, a follow-up message borne in a second downlink frame is received, in which the follow-up message carries a first time of the master clock side which indicates when the master clock side sends the synchronization message.

In Step S105, local clock of the slave clock side is adjusted according to a difference between the first time of the master clock side and the first time of the slave clock side.

According to the embodiment of the present invention, in the synchronous network, the slave clock side can collect the receiving time of the synchronization message at the slave clock side, and acquire the sending time of the synchronization message at the master clock side through the second downlink frame, so that time synchronization is achieved in the synchronous network.

Optionally, the method for synchronizing clock of a slave clock side in a synchronous network according to the embodiment of the present invention can further include the following steps.

In Step S106, a delay request message borne in a third uplink frame is sent from the slave clock side.

In Step S107, an exit indicating pulse is generated according to the sent third uplink frame, in which a time delay between the exit indicating pulse and a framing byte in the third uplink frame is fixed. The exit indicating pulse traverses a First In First Out (FIFO) data buffer of a service unit along with the third uplink frame.

In Step S108, a second time of the slave clock side is collected according to the exit indicating pulse.

In Step S109, a delay response message borne in a fourth downlink frame is received, in which the delay response message carries a second time of the master clock side which indicates the time when the master clock side receives the delay request message.

In Step S110, the local clock of the slave clock side is corrected according to a difference between the second time of the master clock side and the second time of the slave clock side.

According to the embodiment of the present invention, in the synchronous network, the slave clock side can collect the sending time of the delay response message at the slave clock side, and acquire the receiving time of the delay response message at the master clock side through the fourth downlink frame, so that synchronous time adjustment is achieved in the synchronous network.

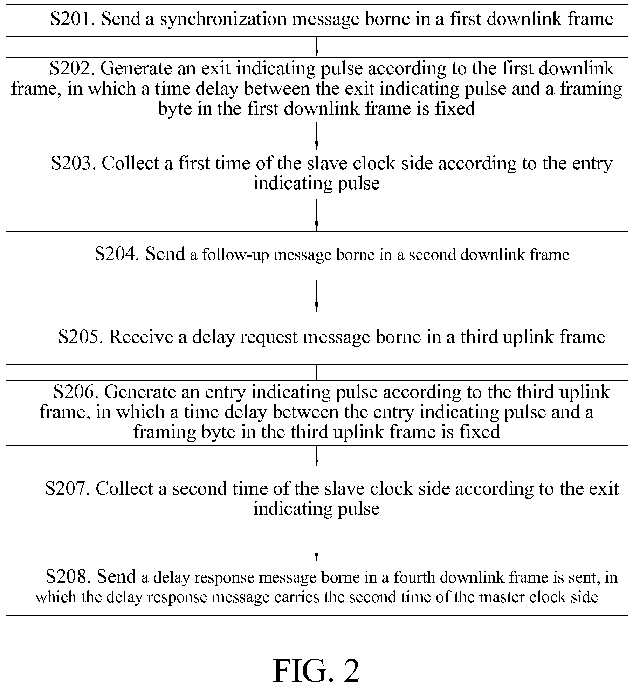

Corresponding to the method for synchronizing clock of a slave clock side in a synchronous network of the present invention, FIG. 2 is a flow chart of a method for synchronizing clock of a master clock side in a synchronous network according to an embodiment of the present invention. As shown in FIG. 2, the method includes the following steps.

In Step S201, a synchronization message borne in a first downlink frame is sent.

In Step S202, an exit indicating pulse is generated according to the first downlink frame, in which a time delay between the exit indicating pulse and a framing byte in the first downlink frame is fixed. The exit indicating pulse traverses an FIFO data buffer of a service unit along with a third uplink frame.

In Step S203, a first time of the master clock side is collected according to the exit indicating pulse.

In Step S204, a follow-up message borne in a second downlink frame is sent, in which the follow-up message carries the first time of the master clock side.

According to the embodiment of the present invention, in the synchronous network, the master clock side can collect sending time of the synchronization message at the master clock side, and sends the collected sending time to the slave clock side through the second downlink frame, so that time synchronization is achieved in the synchronous network.

Optionally, the method for synchronizing clock of a master clock side in a synchronous network according to the embodiment of the present invention can further include the following steps.

In Step S205, a delay request message borne in a third uplink frame is received.

In Step S206, an entry indicating pulse is generated according to the third uplink frame, in which a time delay between the entry indicating pulse and a framing byte in the third uplink frame is fixed.

In Step S207, a second time of the master clock side is collected according to the entry indicating pulse.

In Step S208, a delay response message borne in a fourth downlink frame is sent, in which the delay response message carries the second time of the master clock side.

According to the embodiment of the present invention, in the synchronous network, the master clock side can collect the receiving time of the delay response message at the master clock side, and send the collected receiving time through the fourth downlink frame, so that synchronous time adjustment is achieved in the synchronous network.

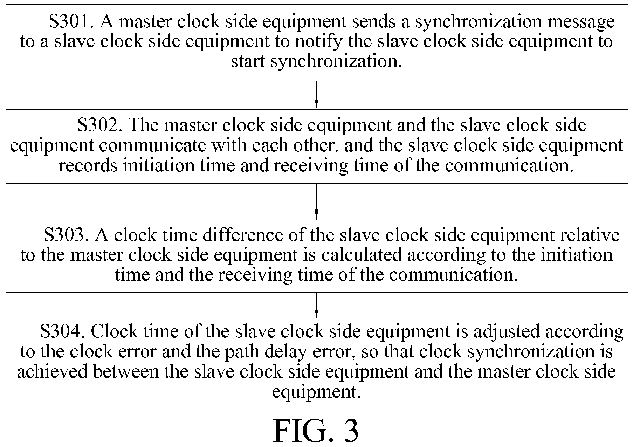

FIG. 3 is a schematic flow chart of a method for synchronizing clock in a synchronous network according to a first embodiment of the present invention.

As shown in FIG. 3, the method for synchronizing clock in a synchronous network according to the embodiment of the present invention includes the following steps.

In Step S301, a master clock side equipment sends a synchronization message to a slave clock side equipment to notify the slave clock side equipment to start synchronization.

The synchronization message is contained in a service frame.

In Step S302, the master clock side equipment and the slave clock side equipment communicate with each other, and the slave clock side equipment records initiation time and receiving time of the communication.

In Step S303, a clock time difference of the slave clock side equipment relative to the master clock side equipment is calculated according to the initiation time and the receiving time of the communication.

The clock time difference includes a clock error and a path delay error.

The clock error refers to a clock difference between the slave clock side equipment and the master clock side equipment without consideration of the path delay error. The path delay error refers to the time consumed during transmission of the service synchronization message in a path between the master clock side equipment and the slave clock side equipment.

In Step S304, clock time of the slave clock side equipment is adjusted according to the clock error and the path delay error, so that clock synchronization is achieved between the slave clock side equipment and the master clock side equipment.

It should be noted that, the master clock side equipment refers to an equipment for providing a synchronization clock in the synchronous network, and any equipment serving as a provider of the synchronization clock can be used as the master clock side equipment. Likewise, the slave clock side equipment is an equipment which is clock synchronized.

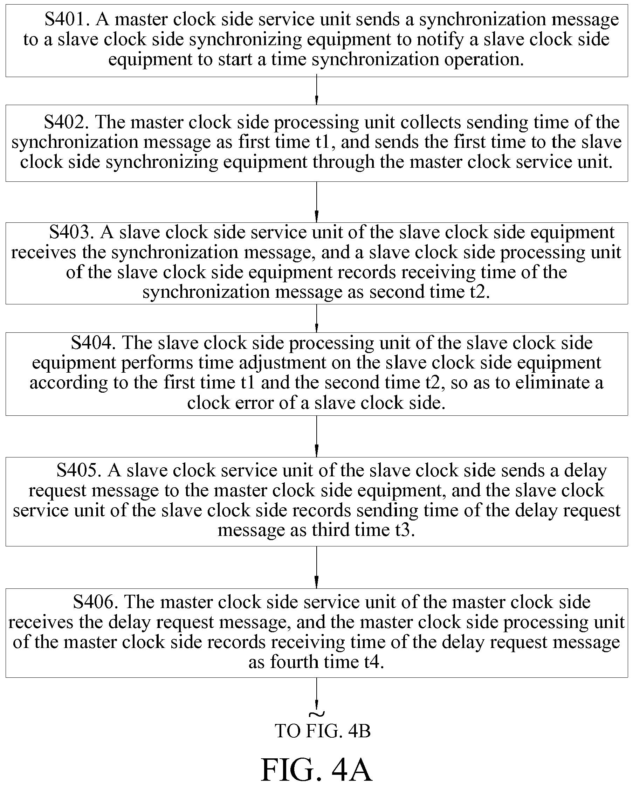

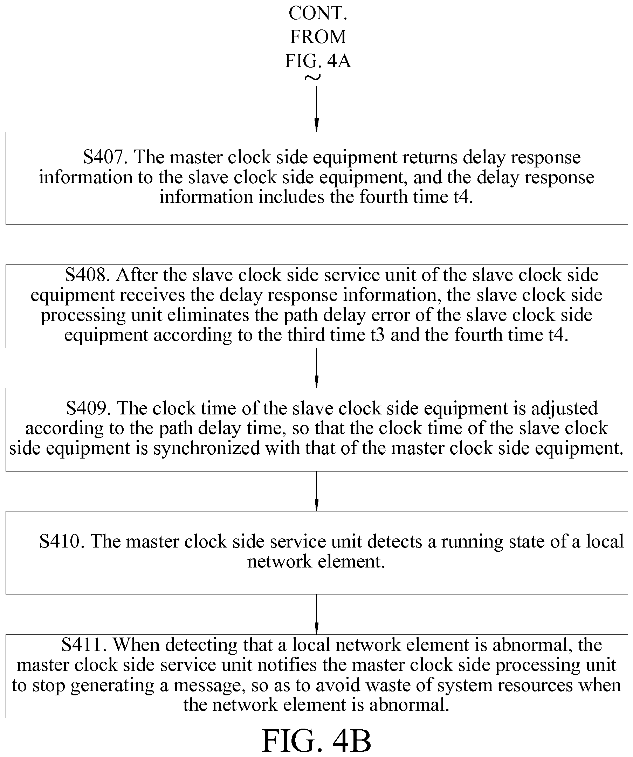

FIG. 4 is a schematic flow chart of a method for synchronizing clock in a synchronous network according to another embodiment of the present invention.

As shown in FIG. 4, the method for synchronizing clock in a synchronous network according to the embodiment of the present invention includes the following steps.

In Step S401, a master clock side service unit sends a synchronization message to a slave clock side synchronizing equipment to notify a slave clock side equipment to start a time synchronization operation.

Specifically, the synchronization message is received from a master clock side processing unit by the master clock side service unit. After receiving the synchronization message, the master clock side service unit inserts the synchronization message into a service frame, and sends the synchronization message to the slave clock side equipment through the service frame.

In Step S402, the master clock side processing unit collects sending time of the synchronization message as first time t1, and sends the first time to the slave clock side synchronizing equipment through the master clock service unit.

Specifically, when sending the synchronization message, the master clock side service unit generates an exit indicating pulse and sends the exit indicating pulse to the master clock side processing unit. A time delay between the exit indicating pulse and a framing byte in the synchronization message service frame is fixed. The framing byte may be any fixed byte in the service frame. A master clock side extracts frame physical information in the exit indicating pulse, and collects timestamp information according to level transition of the exit indicating pulse. The timestamp information includes related information of the first time.

More specifically, in order to ensure the fixed time delay between the exit indicating pulse and the framing byte in the synchronization message service frame, both the exit indicating pulse and the synchronization message pass through an FIFO data buffer of the master clock side service unit.

Further, the master clock side processing unit sends the timestamp information to the slave clock side equipment through the master clock side service unit in the form of a message. The timestamp information may be sent together with the synchronization message, or sent after the synchronization message is sent.

In Step S403, a slave clock side service unit of the slave clock side equipment receives the synchronization message, and a slave clock side processing unit of the slave clock side equipment records receiving time of the synchronization message as second time t2.

In Step S404, the slave clock side processing unit of the slave clock side equipment performs time adjustment on the slave clock side equipment according to the first time t1 and the second time t2, so as to eliminate a clock error of a slave clock side.

More specifically, tdl = t2 - t1 - td, where td is a path delay error between the slave clock side equipment and the master clock side equipment, and here calculation is performed with td = 0 temporarily. However, in fact, here, tdl = (t2 - t1) - td.

Specifically, the adjusted clock time t = to - td1 = to - (t2 - t1) + td, where to is original clock time of the slave clock side equipment, and td is transmission delay time between the master clock side equipment and the slave clock side equipment. For ease of calculation, here, an error caused by transmission delay is preserved, that is, td = 0, so that t = to - (t2 - t1).

In Step S405, a slave clock service unit of the slave clock side sends a delay request message to the master clock side equipment, and the slave clock service unit of the slave clock side records sending time of the delay request message as third time t3.

The delay request message is contained in a service frame.

In Step S406, the master clock side service unit of the master clock side receives the delay request message, and the master clock side processing unit of the master clock side records receiving time of the delay request message as a fourth time t4.

After receiving the delay request message, the master clock side service unit of the master clock side equipment generates an entry indicating pulse, and the master clock side service unit sends the entry indicating pulse to the master clock side processing unit.

The delay request message is borne in a service frame sent by the slave clock side equipment.

A time delay between the entry indicating pulse and a framing byte in the service frame bearing the delay request message is fixed.

In Step S407, the master clock side equipment returns delay response information to the slave clock side equipment, and the delay response information includes the fourth time t4.

The collection and sending of the fourth time can adopt a method similar to the method for bearing the synchronization message in the service frame during the collection and sending of the timestamp information of the synchronization message in the foregoing.

In Step S408, after the slave clock side service unit of the slave clock side equipment receives the delay response information, the slave clock side processing unit eliminates the path delay error of the slave clock side equipment according to the third time t3 and the fourth time t4.

Specifically, the path delay error between the master clock side and the slave clock side is calculated, that is, td = (t4 - t3)/2.

Specifically, in fact, because td is not taken into consideration during calculation in Step 404, time of the slave clock side is one td less than time of the master clock side when the time adjustment is performed on the slave clock side equipment in the foregoing, . That is to say, in the process of calculating the path time delay, td = t4 - (t3 + td), so that it can be obtained after conversion that td = (t4 - t3)/2.

In Step S409, the clock time of the slave clock side equipment is adjusted according to the path delay time, so that the clock time of the slave clock side equipment is synchronized with that of the master clock side equipment.

Specifically, the clock time of the slave clock side equipment is increased by one td on the basis of current time.

Further, the method for synchronizing clock in a synchronous network according to the embodiment of the present invention further includes the following steps.

In Step S410, the master clock side service unit detects a running state of a local network element.

In Step S411, when detecting that a local network element is abnormal, the master clock side service unit notifies the master clock side processing unit to stop generating a message, so as to avoid waste of system resources when the network element is abnormal.

The master clock service unit notifies the master clock side processing unit to stop time synchronization in a message format, and the message format includes a local network element anomaly-indicating byte.

Step S410 can be executed before the time synchronization is started or in any step after the time synchronization is started.

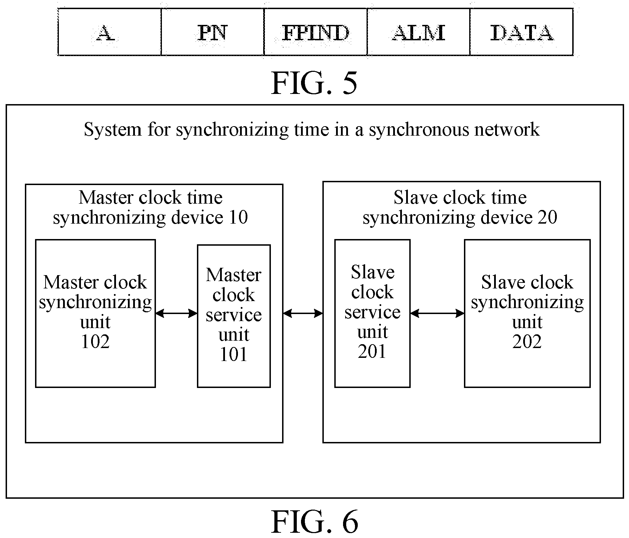

FIG. 5 shows a message format of a message transmitted between a processing unit and a service unit according to an embodiment of the present invention.

In FIG. 5, A is a message header indicating byte, and the processing unit can determine a message header through searching the message header indicating byte. Preferably, the message header indicating byte is 6 bits. Persons skilled in the art should understand that, the message header indicating byte is not limited to 6 bits.

PN denotes a service port number. In the byte, different bit positions denote different service port numbers. It may be agreed upon that a bit position is valid when a bit value is 1, which denotes that a message comes from a port corresponding to the bit position. At this time, only one bit in the byte can be 1. For example, when PN is 0100, it denotes that the third service port is valid. It may also be agreed upon that a bit position is valid when a bit value is 0, which denotes that a message comes from a port corresponding to the bit position. At this time, only one bit in the byte can be 0. For example, when PN is 1, it denotes that the third service port is valid.

FPIND is a frame header signal deviation byte, which is used to indicate deviation of a frame header signal.

ALM is a local network element anomaly-indicating byte, which is used to notify to the processing unit that an anomaly exists in a local network element.

DATA is a message byte, which is used to transfer a message in a service frame.

It should be noted that, the message format shown in FIG. 5 is only a preferred message format of a message transmitted between the processing unit and the service unit according to the embodiment of the present invention, but the present invention is not limited to the message format, and any message format that implements the 1588 protocol through separation can be used.

FIG. 6 is a structural view of a system for synchronizing clock in a synchronous network according to an embodiment of the present invention. As shown in FIG. 6, the system includes a master clock time synchronizing device 10 and a slave clock time synchronizing device 20.

The master clock time synchronizing device 10 includes a master clock service unit 101 and a master clock synchronizing unit 102.

The master clock service unit 101 is adapted to generate an exit indicating pulse according to a first downlink frame, in which a time delay between the exit indicating pulse and a framing byte in the first downlink frame is fixed.

The master clock synchronizing unit 102 is adapted to send a synchronization message borne in the first downlink frame; collect first time of the master clock side according to the exit indicating pulse; and send a follow-up message borne in a second downlink frame, in which the follow-up message carries the first time of the master clock side.

The slave clock time synchronizing device 20 includes a slave clock service unit 201 and a slave clock synchronizing unit 202.

The slave clock service unit 201 is adapted to generate an entry indicating pulse according to the received first downlink frame, in which a time delay between the entry indicating pulse and the framing byte in the first downlink frame is fixed.

The slave clock synchronizing unit 202 is adapted to receive the synchronization message borne in the first downlink frame; collect a first time of the slave clock side according to the entry indicating pulse; receive the follow-up message borne in the second downlink frame, in which the follow-up message carries the first time of the master clock side, which indicates the time when the master clock side sends the synchronization message; and adjust local clock of the slave clock side according to a difference between the first time of the master clock side and the first time of the slave clock side.

Optionally, the master clock service unit 101 is further adapted to generate an entry indicating pulse according to a third uplink frame, in which a time delay between the entry indicating pulse and a framing byte in the third uplink frame is fixed.

The master clock synchronizing unit 102 is further adapted to receive a delay request message borne in the third uplink frame; collect a second time of the master clock side according to the entry indicating pulse; and send a delay response message borne in a fourth downlink frame, in which the delay response message carries the second time of the master clock side.

The slave clock service unit 201 is further adapted to generate an exit indicating pulse according to the sent third uplink frame, in which a time delay between the exit indicating pulse and a framing byte in the third uplink frame is fixed.

The slave clock synchronizing unit 202 is further adapted to send a delay request message borne in the third uplink frame; collect a second time of the slave clock side according to the exit indicating pulse; receive a delay response message borne in a fourth downlink frame, in which the delay response message carries the second time of the master clock side, which indicates the time when the master clock side receives the delay request message; and correct the local clock according to a difference between the second time of the master clock side and the second time of the slave clock side.

Specifically, in the embodiment of the present invention, the master clock side synchronizing equipment includes a master clock side service unit 101 and a master clock side processing unit 102.

The master clock side processing unit 102 is adapted to send a synchronization message to the master clock side service unit 101.

The master clock side service unit 101 is adapted to receive the synchronization message from the master clock side processing unit 102; insert the synchronization message into a synchronization message service frame; and send the synchronization message service frame in a downlink direction.

The master clock side service unit 101 is further adapted to generate an exit indicating pulse, and send the exit indicating pulse to the master clock side processing unit 102, in which a time delay between the exit indicating pulse and a framing byte in the synchronization message service frame is fixed.

The master clock side processing unit 102 is further adapted to collect sending time of the synchronization message sent by the master clock side service unit 101 at the master clock side according to the exit indicating pulse.

The master clock side processing unit 102 is further adapted to bear the collected sending time of the synchronization message in the message, and send the message to the master clock side service unit 101.

The master clock side service unit 101 is further adapted to insert the message bearing the sending time of the synchronization message into a service frame and send the service frame out.

According to the embodiment of the present invention, in the synchronous network, the master clock side can collect the sending time of the synchronization message at the master clock side, and bear the sending time of the synchronization message through the synchronization message service frame or a follow-up message service frame, so as to achieve time synchronization in the synchronous network.

Further, the master clock side service unit 101 is further adapted to receive a delay request service frame in an uplink direction, in which the delay request service frame bears a delay request message; receive a delay response message from the master clock side processing unit 102, in which the delay response message bears second time when the master clock side service unit 101 receives the delay request message; insert the received delay response message into a delay response service frame; and send the delay response service frame in the downlink direction.

The master clock side processing unit 102 is further adapted to send the delay response message to the master clock side service unit 101.

Further, the master clock side service unit 101 is further adapted to generate an entry indicating pulse, and send the entry indicating pulse to the master clock side processing unit 102, in which a time delay between the entry indicating pulse and a framing byte in the delay request service frame is fixed; extract the delay request message from the delay request service frame; and send the delay request message and signal deviation information of the entry indicating pulse to the master clock side processing unit 102.

The master clock side processing unit 102 is further adapted to collect entry time of the delay request service frame received by the master clock side service unit 101 according to the entry indicating pulse; calculate sending time of the delay response message according to the collected entry time of the delay request service frame and the received signal deviation information of the entry indicating pulse; and bear the sending time of the delay response message in the delay response message, and send the delay response message to the master clock side service unit 101.

Further, the master clock side service unit 101 is further adapted to detect a running state of a local network element; and notify the master clock side processing unit 102 to stop performing a synchronization operation when detecting that the local network element is abnormal, so as to avoid waste of system resources when the network element is abnormal.

According to the embodiment of the present invention, in the synchronous network, the master clock side can collect the sending time of the delay response message, and bear the delay response message through the service frame, so as to achieve time synchronization in the synchronous network.

As shown in FIG. 6, the slave clock side synchronizing equipment includes a slave clock side service unit 201 and a slave clock side processing unit 202.

The slave clock side service unit 201 is adapted to receive a service frame in the uplink direction; and extract a message from the service frame, and send the message to the slave clock side processing unit 202.

The slave clock side processing unit 202 is adapted to receive the message from the slave clock side service unit 201, and extract time information from the message.

The time information includes sending time of the message at the master clock side.

Further, the slave clock side service unit 201 is further adapted to generate an entry indicating pulse, and send the entry indicating pulse to the slave clock side processing unit 202, in which a time delay between the entry indicating pulse and a framing byte in the synchronization message service frame is fixed; and send signal deviation information of the entry indicating pulse to the slave clock side processing unit 202.

The slave clock side processing unit 202 is further adapted to collect entry time of the service frame bearing the message received by the slave clock side service unit 201 according to the entry indicating pulse; and calculate clock time of the slave clock side when the synchronization message is received by the slave clock side according to the collected entry time of the service frame and the received signal deviation information of the entry indicating pulse.

Further, the slave clock side processing unit 202 is further adapted to calculate a clock error and a path delay error of the slave clock side relative to the master clock side according to the sending time at the master clock side and the receiving time at the slave clock side of the extracted message; and time synchronize the slave clock side equipment with the master clock side equipment according to the clock error and the path delay error.

Further, the slave clock side service unit 201 is further adapted to receive a delay request message from the slave clock side processing unit 202; insert the delay request message into a delay request service frame; send the delay request service frame in the downlink direction; receive a delay response service frame in the uplink direction; extract a delay response message from the delay response service frame, in which the delay response message bears second time of the delay request message; and send the delay response message to the slave clock side processing unit 202.

The slave clock side processing unit 202 is further adapted to send the delay request message to the slave clock side service unit 201, and receive the delay response message from the slave clock side service unit 201.

Further, the slave clock side service unit 201 is further adapted to generate an exit indicating pulse, and send the exit indicating pulse to the slave clock side processing unit 202, in which a time delay between the exit indicating pulse and a framing byte in the delay request service frame is fixed.

The slave clock side processing unit 202 is further adapted to collect sending time of the delay request message sent by the slave clock side service unit 201 according to the exit indicating pulse provided by the slave clock side service unit 201.

Further, the slave clock side service unit 201 is further adapted to send the delay response message to the slave clock side processing unit 202.

The slave clock side processing unit 202 is further adapted to receive the delay response message from the slave clock side service unit 201; and calculate a path delay error between the slave clock side equipment and the master clock side equipment according to the collected sending time of the delay request message at the slave clock side and receiving time of the delay request message at the master clock side.

Further, the slave clock side service unit 201 is further adapted to detect a running state of a local network element; and notify the slave clock side processing unit 202 to stop performing a clock synchronization related operation when detecting that the local network element is abnormal, so as to avoid waste of system resources when the network element is abnormal.

A sending circuit of a service frame in a synchronous network and a receiving circuit of a service frame in a synchronous network according to an embodiment of the present invention are described hereinafter.

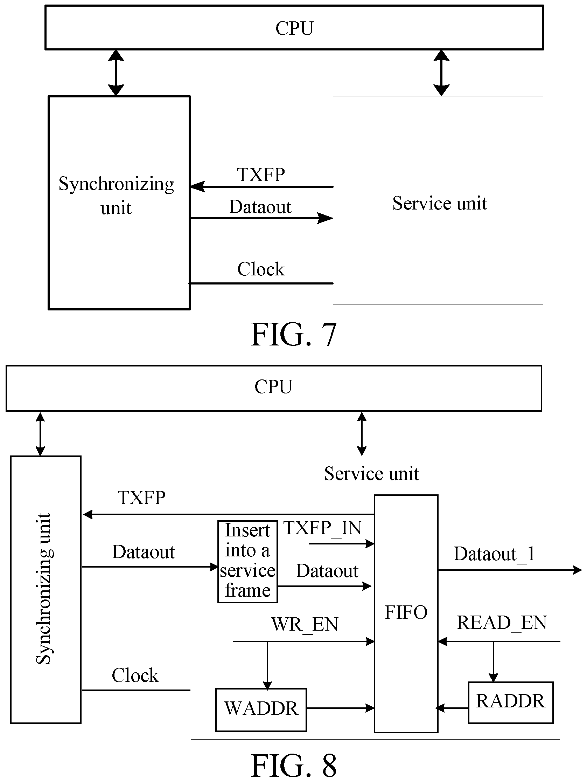

As shown in FIGs. 7 and 8, an exit indicating pulse TXFP input terminal of a processing unit is connected to an exit indicating pulse TXFP output terminal of a service unit; and a message data input terminal of the processing unit is connected to a message data output terminal of the service unit. WARDD and RADDR are a writing address generator and a reading address generator respectively. Hence, the service unit provides an exit indicating pulse to the processing unit, and the service unit receives a message from a protocol processing unit through a data line.

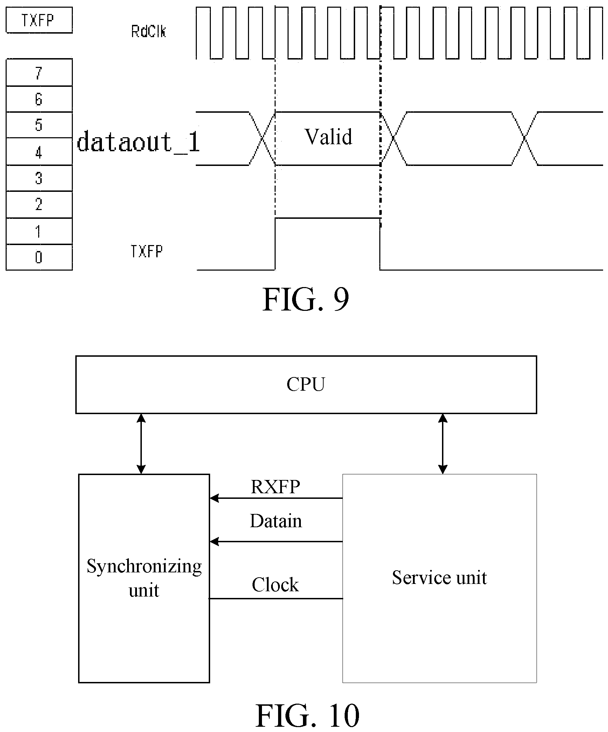

FIG. 9 is a timing diagram of an exit indicating pulse TXFP. An operating mechanism of the exit indicating pulse TXFP is described hereinafter. As shown in FIG. 8, a service unit generates an exit indicating pulse TXFP in a sending direction of a service frame as reference time of message exit time. The exit indicating pulse and service frame data in the service unit traverse an FIFO data buffer in the service unit. That is to say, the exit indicating pulse generated by the service unit and the service frame data bearing a message are firstly input into the FIFO data buffer, and the FIFO data buffer outputs the exit indicating pulse passing through the FIFO data buffer, and at the same time outputs a service frame bearing the message passing through the FIFO data buffer. Before passing through the FIFO data buffer in the service unit, the service frame bearing the message has certain timing information. Due to uncertainty in the difference between FIFO reading and writing addresses, after the service frame passes through the FIFO data buffer, a timing relation between the timing information and the service frame is damaged. In the service unit, the exit indicating pulse TXFP and the service frame traverse the FIFO data buffer simultaneously, and when the service frame is sent out, the exit indicating pulse TXFP is generated and sent to a synchronizing unit, so that the certain timing relation between the exit indicating pulse TXFP and the service frame of the service unit is guaranteed, thereby eliminating time jitter caused by delay of the FIFO data buffer.

A clock terminal of the processing unit is connected to a clock terminal of the service unit, so that the processing unit provides a clock signal to the service unit, or the service unit provides a clock signal to the processing unit.

The sending circuit of the service frame in the synchronous network according to the embodiment of the present invention may be located at a master clock side or a slave clock side in the synchronous network.

FIG. 10 is a schematic view of a receiving circuit of a service frame in a synchronous network according to an embodiment of the present invention. The receiving circuit includes a processing unit and a service unit.

An entry indicating pulse RXFP input terminal of a processing unit is connected to an entry indicating pulse RXFP output terminal of a service unit; and a message data output terminal of the processing unit is connected to a message data input terminal of the service unit. Hence, the service unit provides an entry indicating pulse RXFP to the processing unit, and the service unit sends a message to the processing unit through a data line.

A clock terminal of the processing unit is connected to a clock terminal of the service unit. A clock output terminal of the processing unit is connected to a clock input terminal of the service unit, so that the processing unit provides a clock signal to the service unit, or the service unit provides a clock signal to the processing unit.

In the receiving circuit of the service frame in the synchronous network according to the embodiment of the present invention, the processing unit extracts frame physical information of the entry indicating pulse in the synchronous network, collects timestamp information according to level transition of the entry indicating pulse, and provides a more accurate synchronization signal for the synchronous network.

The receiving circuit of the service frame in the synchronous network according to the embodiment of the present invention may be located at a master clock side or a slave clock side in the synchronous network.

In a transmission system of a clock message in the synchronous network according to the embodiment of the present invention, a master clock side synchronizing equipment and a slave clock side synchronizing equipment transmit a service frame bearing a message, so that higher time synchronization precision than Ethernet is achieved by utilizing high precision clock and synchronization characteristics of the synchronous network, and the implementation cost is low.

The embodiments of the present invention can be applied in a Synchronous Digital Hierarchy (SDH) network, and can also be applied to other communication networks, such as an optical transport network and an Ethernet network.

The present invention is not limited to the step order according to the method embodiments. It is quite easy for persons skilled in the art to derive other step orders from the solutions according to the embodiments of the present invention, so as to achieve the same objectives as the present invention.

Persons skilled in the art should understand that, the various functional entities in the foregoing embodiments may be located in different physical entities respectively, and may also be located in the same physical entity, which is not limited in the present invention. When any two or more entities are located in the same physical entity, interaction between the entities is implemented internally, which is not limited in the present invention. Apparently, persons skilled in the art may make changes to the specific implementations without departing from the scope of the present invention.

Persons having ordinary skill in the art may understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be a magnetic disk, an optical disk, a read-only memory (ROM), or a random access memory (RAM).

The above descriptions are merely preferred embodiments of the present invention, but not intended to limit the present invention.

## Claims

1. A method for synchronizing clock in a synchronous network, comprising the steps of:
receiving (S401), by a slave clock side equipment, a synchronization message sent from a master clock side equipment;
recording (S403), by the slave clock side equipment, a sending time of the synchronization message as a first time t1, and a receiving time of the synchronization message as a second time t2;
performing (S404) a time adjustment on the slave clock side equipment to obtain an adjusted clock time t, wherein t = to - (t2 - t1) ,wherein to is the original clock time of the slave clock side equipment;
sending (S405), by the slave clock side equipment, a delay request message to the master clock side equipment, and recording a sending time of the delay request message as a third time t3;
receiving (S406) the delay request message by the master clock side equipment and recording the receiving time of the delay request message as a fourth time t4;
receiving (S407), by the slave clock side equipment, a delay response information from the master clock side equipment, wherein the delay response information does comprise the receiving time of the sent delay request message as the fourth time t4;
calculating (S408), by the slave clock side equipment, a path delay time td between the master clock side equipment and the slave click side equipment, wherein td = (t4 - t3)/2; and
re-adjusting (S409) the adjusted clock time of the slave clock side equipment according to the calculated path delay time td, wherein the clock time of the slave clock side equipment is re-adjusted by adding one td on the basis of current clock time of the slave clock side equipment:
the method for synchronizing clock is **characterized by**
detecting, by the slave clock side equipment, a running state of a local network element; and
notifying, by the slave clock side equipment, a slave clock side processing unit of the slave clock side equipment to stop performing a clock synchronization related operation, when detecting that the running state of a local network element is abnormal.

2. The method for synchronizing clock in a synchronous network according to claim 1, further **characterized in that**, both the delay request message and the delay response information are borne in a service frame and sent between the master clock side equipment and the slave clock side equipment.

3. A computer-readable medium having computer executable instructions for causing a computer in a slave side equipment to perform steps according to the method of claim 1 or 2.

## Patentansprüche

1. Verfahren zur Synchronisierung von Takt in einem synchronen Netzwerk, die folgenden Schritte aufweisend:
Empfangen (S401), durch eine Strukturseiteneinrichtung, einer Synchronisierungsnachricht, die von einer Mastertaktseiteneinrichtung gesendet wird;
Aufzeichnen (S403), durch die Strukturseiteneinrichtung, einer Sendezeit der Synchronisierungsnachricht als eine erste Zeit t1 und einer Empfangszeit der Synchronisierungsnachricht als eine zweite Zeit t2;
Ausführen (S404) einer Zeitanpassung in der Strukturseiteneinrichtung zum Erhalten einer angepassten Taktzeit t, wobei t = to - (t2 - tl), wobei to die ursprüngliche Taktzeit der Strukturseiteneinrichtung ist;
Senden (S405), durch die Strukturseiteneinrichtung, einer Verzögerungsanforderungsnachricht an die Mastertaktseiteneinrichtung und Aufzeichnen einer Sendezeit der Verzögerungsanforderungsnachricht als eine dritte Zeit t3;
Empfangen (S406) der Verzögerungsanforderungsnachricht durch die Mastertaktseiteneinrichtung und Aufzeichnen der Empfangszeit der Verzögerungsanforderungsnachricht als eine vierte Zeit t4;
Empfangen (S407), durch die Strukturseiteneinrichtung, einer Verzögerungsantwortinformation von der Mastertaktseiteneinrichtung, wobei die Verzögerungsantwortinformation die Empfangszeit der gesendeten Verzögerungsanforderungsnachricht als die vierte Zeit t4 aufweist;
Berechnen (S408), durch die Strukturseiteneinrichtung, einer Pfadverzögerungszeit td zwischen der Mastertaktseiteneinrichtung und der Strukturseiteneinrichtung, wobei td = (t4 - t3)/2; und
Neuanpassen (S409) der angepassten Taktzeit der Strukturseiteneinrichtung gemäß der berechneten Pfadverzögerungszeit td, wobei die Taktzeit der Strukturseiteneinrichtung durch Addieren von ein td auf der Basis von laufender Taktzeit der Strukturseiteneinrichtung neu angepasst wird;
wobei das Verfahren zur Synchronisierung von Takt **gekennzeichnet ist durch** Erkennen, durch die Strukturseiteneinrichtung, eines Laufzustands eines lokalen Netzwerkelements; und
Anweisen, durch die Strukturseiteneinrichtung, einer Strukturseitenverarbeitungseinheit der Strukturseiteneinrichtung zum Anhalten der Ausführung eines taktsynchronisierungsbezogenen Vorgangs, wenn erkannt wird, dass der Laufzustand eines lokalen Netzwerkelements anomal ist.

2. Verfahren zur Synchronisierung von Takt in einem synchronen Netzwerk nach Anspruch 1, ferner **dadurch gekennzeichnet, dass** sowohl die Verzögerungsanforderungsnachricht als auch die Verzögerungsantwortinformation in einem Dienst-Frame getragen und zwischen der Mastertaktseiteneinrichtung und der Strukturseiteneinrichtung gesendet werden.

3. Maschinenlesbares Medium, das rechnerausführbare Befehle zum Bewirken aufweist, dass ein Rechner in einer Strukturseiteneinrichtung Schritte nach dem Verfahren von einem der Ansprüche 1 oder 2 ausführt.

## Revendications

1. Procédé de synchronisation d'horloge dans un réseau synchrone, le procédé comprenant les étapes suivantes :
recevoir (S401), au moyen d'un équipement côté horloge esclave, un message de synchronisation envoyé par un équipement côté horloge maître ;
enregistrer (S403), au moyen de l'équipement côté horloge esclave, un instant d'envoi du message de synchronisation comme premier instant t1, et un instant de réception du message de synchronisation comme deuxième instant t2 ;
effectuer (S404) un réglage de temps sur l'équipement côté horloge esclave pour obtenir une heure d'horloge ajustée t, avec t = to - (t2 - t1), to étant l'heure d'horloge d'origine de l'équipement côté horloge esclave ;
envoyer (S405), au moyen de l'équipement côté horloge esclave, un message de demande de retard à l'équipement côté horloge maître, et enregistrer un instant d'envoi du message de demande de retard comme troisième instant t3 ;
recevoir (S406) le message de demande de retard au moyen de l'équipement côté horloge maître et enregistrer l'instant de réception du message de demande de retard comme quatrième instant t4 ;
recevoir (S407), au moyen de l'équipement côté horloge esclave, une information de réponse de retard de l'équipement côté horloge maître, l'information de réponse de retard comprenant l'instant de réception du message de demande de retard envoyé comme quatrième instant t4 ;
calculer (S408), au moyen de l'équipement côté horloge esclave, un temps de retard de chemin td entre l'équipement côté horloge maître et l'équipement côté horloge esclave, avec td = (t4 -13)/2 ; et
réajuster (S409) l'heure d'horloge ajustée de l'équipement côté horloge esclave en fonction du temps de retard de chemin calculé td, l'heure d'horloge de l'équipement côté horloge esclave étant réajusté par ajout d'un td sur la base de l'heure d'horloge actuelle de l'équipement côté horloge esclave ;
le procédé de synchronisation d'horloge étant **caractérisé par**
la détection, au moyen de l'équipement côté horloge esclave, de l'état de fonctionnement d'un élément de réseau local ; et
la notification, au moyen de l'équipement côté horloge esclave, d'une unité de traitement côté horloge esclave de l'équipement côté horloge esclave pour arrêter une opération liée à la synchronisation d'horloge lorsqu'il est détecté que l'état de fonctionnement d'un élément de réseau local est anormal.

2. Procédé de synchronisation d'horloge dans un réseau synchrone selon la revendication 1, **caractérisé en outre en ce que** le message de demande de retard et les informations de réponse de retard sont portés dans une trame de service et envoyés entre l'équipement côté horloge maître et l'équipement côté horloge esclave.

3. Support lisible par ordinateur comportant des instructions exécutables par ordinateur pour amener un ordinateur d'un équipement côté esclave à effectuer des étapes selon le procédé de la revendication 1 ou 2.
